# EUROPEAN PATENT SPECIFICATION

(11) **EP 3 555 473 B1**
(45) Date of publication and mention of the grant of the patent: **21.10.2026**
(21) Application number: 16815955.6
(22) Date of filing: 14.12.2016
(51) Int. Cl.: F04B 3/00, F04B 9/04, F04B 39/10

(54) **CLAMPING ARRANGEMENT FOR VALVES IN RECIPROCATING COMPRESSOR CYLINDERS**
SPANNANORDNUNG FÜR VENTILE IN HUBKOLBENVERDICHTERZYLINDERN
AGENCEMENT DE SERRAGE POUR SOUPAPES DANS DES CYLINDRES DE COMPRESSEUR ALTERNATIF

(43) Date of publication of application: 23.10.2019
(73) Proprietor: Howden Thomassen Compressors B.V., 6990 AB Rheden (NL)
(72) Inventor: OTTEN, Edwinus Joseph Maria, 6991 Rheden (NL); LANGELAAR, Antal, 7141 TZ GROENLO (NL); VAN DIEMEN, Cornelis Theodorus, 6991 Rheden (NL)
(74) Representative: Murgitroyd & Company
(86) International application number: PCT/IB2016/057624
(87) International publication number: WO 2018/109526

(56) References cited:
- WO-A1-94/20754
- CN-U- 202 914 280
- CN-U- 203 009 235
- JP-U- S 603 289
- US-A- 1 829 954

## Description

### FIELD OF THE DISCLOSURE

The present disclosure generally relates to a valve assembly for use in a reciprocating compressor cylinder. More specifically, the present disclosure describes an improved clamping arrangement for a valve assembly used in a reciprocating compressor cylinder.

### BACKGROUND OF THE DISCLOSURE

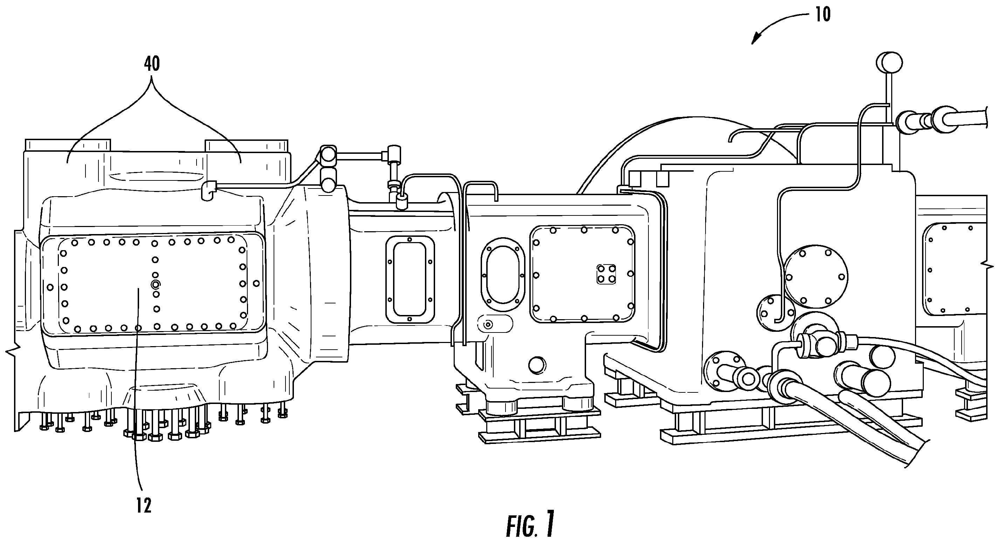

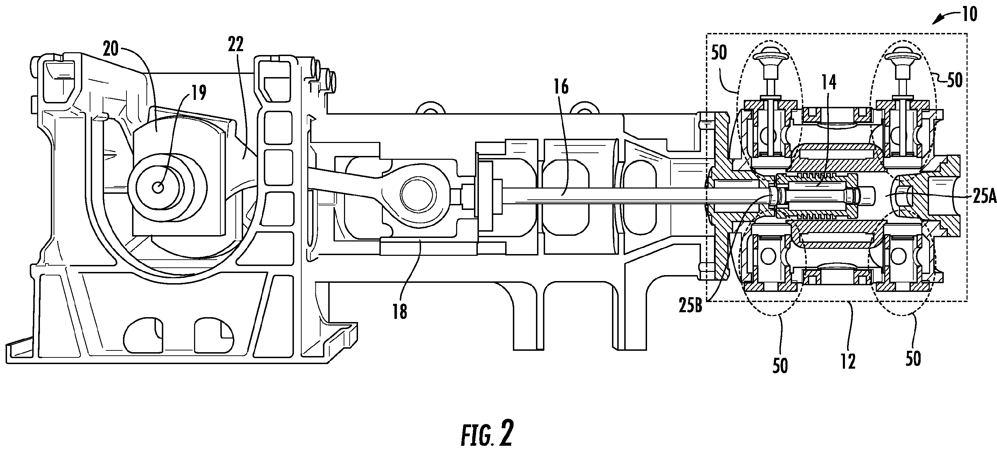

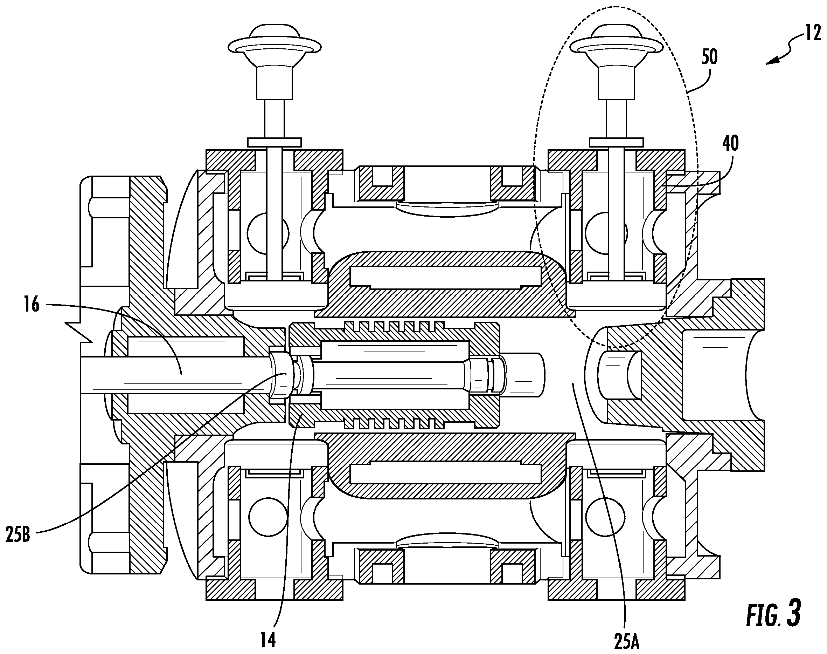

Referring to **FIGS. 1-3****,** compressors 10 and, more specifically, piston compressors, are generally known. Such compressors 10 may be double-acting compressors which include one or more cylinders 12 that include a movable piston 14 located therein.

Generally speaking, and as will be readily appreciated by one of ordinary skill, the compressor 10 may include a cylinder 12, in which one or more pistons 14 are slidably disposed for reciprocating movement therein. A piston rod 16 is fixed at one end to the piston 14, and at an opposite end to a crosshead 18 that may be reciprocally guided for movement in a straight line. Rotary movement of a drive shaft 19 is transmitted to the crosshead 18 by way of a crank 20, which may be connected to a rod 22. As the crank 20 turns, it causes the rod 22 to move along a path that includes both horizontal and vertical components of motion. The rod 22 is coupled to the crosshead 18 in a manner that enables the crosshead 18 to move due to the manner in which the crosshead 18 is guided.

In use, the compressor 10 may be of the double acting type, in which compression chambers 25A, 25B are formed in the cylinder 12 on either side of the piston 14. Each of the compression chambers 25A, 25B is provided with a pair of valve assemblies 50 (for example, the valve assemblies 50 may be an inlet valve and an outlet valve, also known as a suction valve and a discharge valve) located within a valve cage 40 disposed on the cylinder 12 of the compressor 10. As will be generally appreciated, the cylinder 12 can include any number of valve assemblies 50. Movement of the piston 14 in a first direction causes gas at a suction pressure to be introduced by way of the inlet valve into a first compression chamber 25A. At the same time, the gas present in the second compression chamber 25B is compressed and discharged at a discharge pressure by way of the outlet valve.

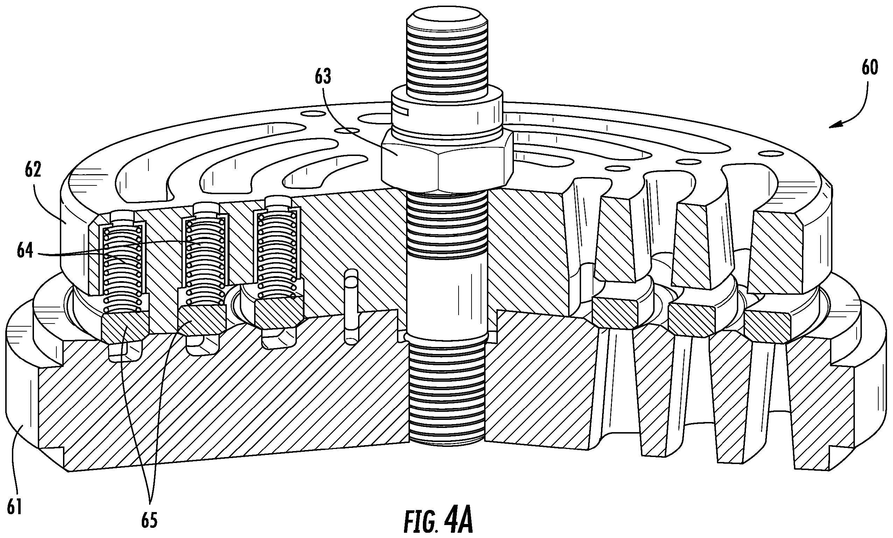

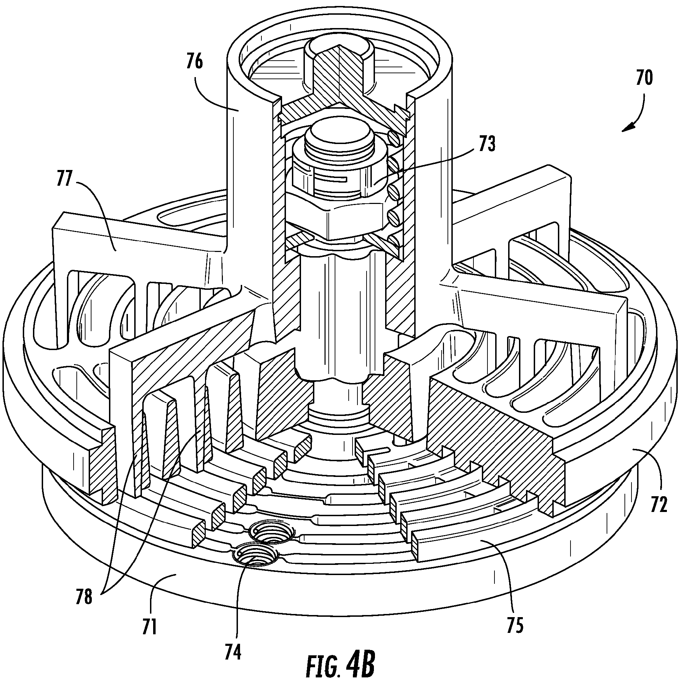

As previously mentioned, the valve assemblies 50 may be a discharge valve or a suction valve. Referring to **FIG. 4A****,** as would be readily understood by one of ordinary skill in the art, a conventional discharge valve 60 may include a valve seat 61 and a valve guard 62. As will be described in greater detail below, the valve seat 61 may sit on a surface 13 of the cylinder 12. The valve guard 62 may be coupled to the valve seat 61 by a fastener, for example, a threaded bolt and nut 63 as shown. Alternatively, the valve guard 62 may sit on a surface 13 of the cylinder 12 and the valve seat 61 may sit on the surface of the valve guard. The valve guard 62 may further include a plurality of springs 64 and sealing elements 65. Referring to **FIG. 4B****,** as would be readily understood by one of ordinary skill in the art, a conventional suction valve 70 may include a valve guard 71 and a valve seat 72. As will be described in greater detail below, the valve seat 72 may sit on a surface 13 of the cylinder 12. The valve seat 72 may be coupled to the valve guard 71 by a fastener, for example, a threaded bolt and nut 73 system as shown. The valve guard 71 may further include a plurality of springs 74 and sealing elements 75. In addition, the suction valve 70 may include an optional unloader 76, a plurality of unloader arms 77 and a plurality of unloader fingers 78, or an optional plug unloader. It should be understood that that the discharge valve 60 and suction valve 70 are being illustrated for reference purposes only, and that the present disclosure may be utilized with any valve assembly 50.

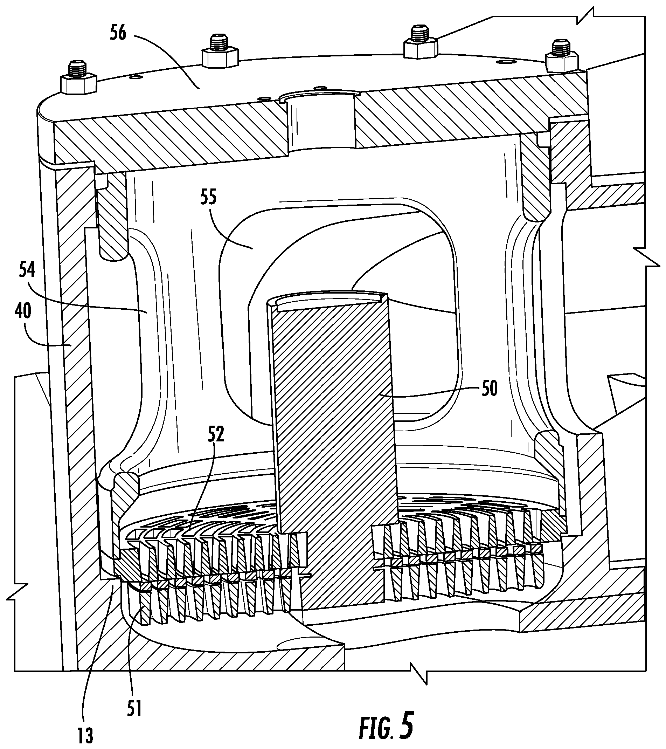

Referring to **FIG. 5**, a detail view of an exemplary clamping method for a valve assembly 50 (e.g., for a discharge valve 60 or a suction valve 70) used in a reciprocating compressor 10 is shown. The valve assembly 50 is received within a valve cage 40 associated with the cylinder12. More specifically, the valve assembly 50 may be clamped within the valve cage 40 via an arrangement that generally includes a valve cover 56 and a valve gland 54. As previously described in relation to the discharge valve 60 and the suction valve 70, the valve assembly 50 may include a valve guard 51 and a valve seat 52. The valve seat 52 and/or the valve guard 51 (e.g., depending on the type of valve assembly 50 being used) may rest on or contact a surface 13 of the cylinder 12 to support the valve assembly 50 thereupon, and to expose the valve assembly 50 to an interior portion of the cylinder 12. The valve gland 54 is positioned within the valve cage 40 so that one end of the valve gland 54 contacts the valve assembly 50, more specifically, one of the valve seat 52 or the valve guard 51, and an opposite end of the valve gland 54 contacts the valve cover 56. Thus arranged, when the valve cover 56 is pressed toward the valve cage 40 (e.g., by tightening a plurality of fasteners disposed between the valve cover 56 and valve cage 40), the valve cover 56 contacts the valve gland 54 and presses the valve gland 54 down on the valve assembly 50 to thereby clamp the valve assembly 50 onto the cylinder 12.

While a gland clamping arrangement as illustrated has proven acceptable in the past, one problem with using a valve gland 54 to provide the desired clamping and sealing arrangement for the valve assembly 50 is that it can result in a relatively complicated geometrical and dimensional dependency between the dimensions of the valve assembly 50, the valve gland 54, the valve cover 56 and the valve cage 40. Such geometrical and dimensional dependency can result in sealing problems should the tolerances of the individual components not be adequately controlled. In some applications, for example, in liquid natural gas (LNG) regasification and (re)liquefaction plants, where cold process gases are being compressed, this geometrical dependency causes issues that can lead to ineffective sealing between engagement surfaces. This, in turn, can require rework, frequent replacement of seals, and/or can require that a more complex seal or a more complex hold down solution be employed. Alternatively, or in addition, since very tight dimensional tolerances must be held for the various components, increased manufacturing costs can be incurred.

In addition, conventional construction of a valve assembly 50 employing a valve gland 54 to clamp the assembly to the cylinder 12 can result in a relatively more expensive system. High forces acting on the valve gland 54 require the valve gland 54 to be engineered to have a certain minimum wall thickness. In addition, forming the necessary openings 55 in the walls of the valve gland 54 to permit gas flow may result in the valve gland 54 having a more complex design than may be desired.

One alternative solution (not shown) has been to incorporate separate hold down bolts that protrude through the valve cover to press directly down onto the valve gland. However, by applying separate hold down bolts in the valve cover to press down on the valve gland requires the incorporation of a flat seal for the valve cover and separate seals for each of the hold down bolts which are protruding through the valve cover. In addition, the valve seal results in a complex and expensive solution since all of the bolts have to be tensioned and sealed individually and can fail individually. Furthermore, there is a risk associated with the bolts loosening over time.
JP S60-3289 is directed to a valve seat assembly with a cover for mounting on a clylinder.

In view of the foregoing, it would be desirable to provide a new and improved clamping method for a valve assembly used in a compressor.

### SUMMARY OF THE DISCLOSURE

This Summary is provided to introduce a selection of concepts in a simplified form that are further described below in the Detailed Description. This Summary is not intended to identify key features or essential features of the claimed subject matter, nor is it intended as an aid in determining the scope of the claimed subject matter.

Disclosed herein is an improved clamping device for securing a valve assembly to a cylinder in a reciprocating compressor. The valve assembly at least partially disposed within a valve cage sealed from the surrounding environment by a valve cover. The clamping device including a clamping mechanism for securing the valve assembly to the cylinder, wherein the clamping mechanism is free of contact with the valve cover.

The clamping mechanism may include a clamping ring for securing the valve assembly directly to the cylinder. The clamping ring may be configured to extend around, and contact, a perimeter portion of the valve assembly. The clamping ring may include a plurality of openings for receiving a plurality of fasteners for securing the clamping ring, and hence the valve assembly, to the cylinder.

Alternatively, the clamping mechanism may be integrated with the valve assembly. The clamping mechanism may include a clamping flange that is integral to the valve assembly, the clamping flange for securing the valve assembly directly to the cylinder. The integrated clamping flange may include a pluraity of openings for receiving a plurality of fasteners for securing the integrated clamping flange, and hence the valve assembly, to the cylinder.

The plurality of fasteners may be elongated fasteners that extend adjacent to, but do not contact, the valve cover.

The present disclosure is directed to a valve clamping assembly for securing a valve assembly (*i.e.,* suction or discharge valves) to a cylinder of a reciprocating compressor according to claim 1.

The clamping mechanism may include a clamping ring for securing the valve assembly directly to the cylinder. The clamping ring may be configured to extend around a perimeter of the valve assembly. Alternatively, the clamping mechanism may be integrated into the valve assembly. The integrated clamping flange may secure the valve assembly directly to the cylinder.

The present disclosure further discloses a method for securing a valve assembly to a cylinder of a reciprocating compressor according to claim 10.

The clamping mechanism may be a clamping ring that extends around a perimeter of a valve assembly. Alternatively, the clamping mechanism may be a flange integrated into a valve assembly.

### BRIEF DESCRIPTION OF THE DRAWINGS

By way of example, specific embodiments of the disclosed device will now be described, with reference to the accompanying drawings, in which:
**FIG. 1** illustrates a side prospective view of an illustrative piston compressor;
**FIG. 2** illustrates a cross-sectional view of the piston compressor shown in **FIG. 1**;
**FIG. 3** illustrates a cross-sectional view of a cylinder used in combination with the piston compressor shown in **FIG. 1**;
**FIG. 4A** illustrates a cross-sectional perspective view of a conventional discharge valve used in combination with the piston compressor shown in **FIG. 1**;
**FIG. 4B** illustrates a cross-sectional perspective view of a conventional suction valve used in combination with the piston compressor shown in **FIG. 1**;
**FIG. 5** illustrates a cross-sectional perspective view of a prior art clamping arrangement for a valve assembly used in combination with the piston compressor shown in **FIG. 1**;
**FIG. 6A** illustrates a cross-sectional perspective view of a valve assembly used in reciprocating compressors, the valve assembly being secured to the cylinder by an exemplary external clamping arrangement according to the present disclosure;
**FIG. 6B** illustrates a cross-sectional perspective view of a valve assembly used in reciprocating compressors, the valve assembly being secured to the cylinder by an exemplary integrated clamping arrangement according to the present disclosure;
**FIG. 6C** illustrates an alternate cross-sectional perspective view of a valve assembly used in reciprocating compressors, the valve assembly being secured to the cylinder by the exemplary integrated clamping arrangement shown in FIG. 6B, the integrated clamping arrangement including elongated fasteners;
**FIG.** 7 illustrates a cross-sectional perspective view of a valve assembly located within a cylinder, the valve assembly being secured to the cylinder by the exemplary integrated clamping arrangement shown in **FIG. 6B**;
**FIG. 8A** is a perspective view of a valve assembly, the valve assembly including the exemplary integrated clamping arrangement shown in **FIG. 6B****,** the integrated clamping arrangement including an exemplary embodiment of a seal; and
**FIG. 8B** is a bottom view of the valve assembly shown in **FIG. 8A****,** the valve assembly including the exemplary integrated clamping arrangement shown in **FIG. 6B** and the exemplary embodiment of the seal.

### DETAILED DESCRIPTION

A device and method in accordance with the present disclosure will now be described more fully hereinafter with reference to the accompanying drawings, in which preferred embodiments of the device and method are shown. In the drawings, like numbers refer to like elements throughout.

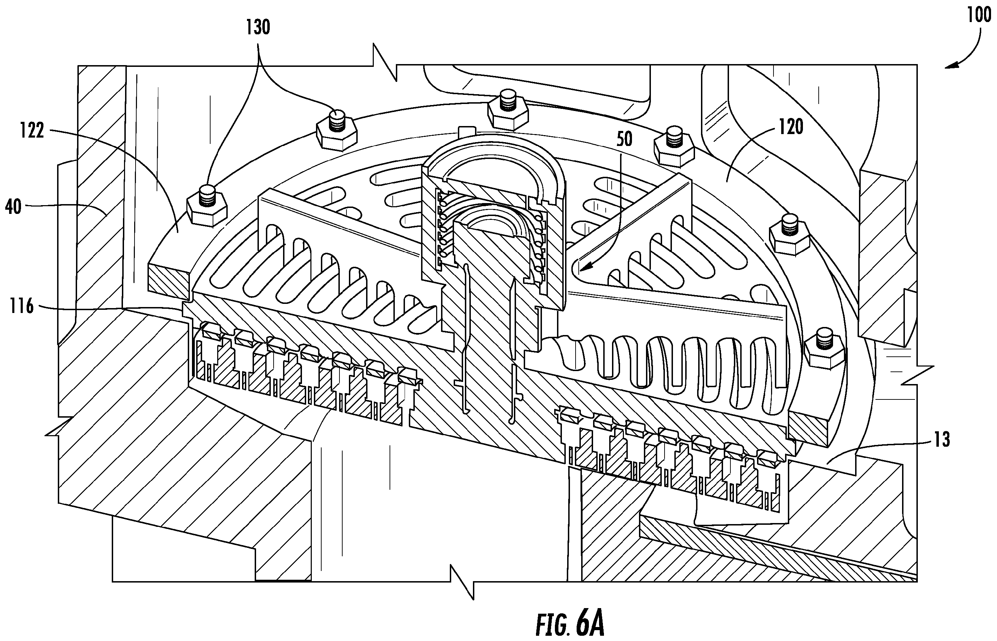

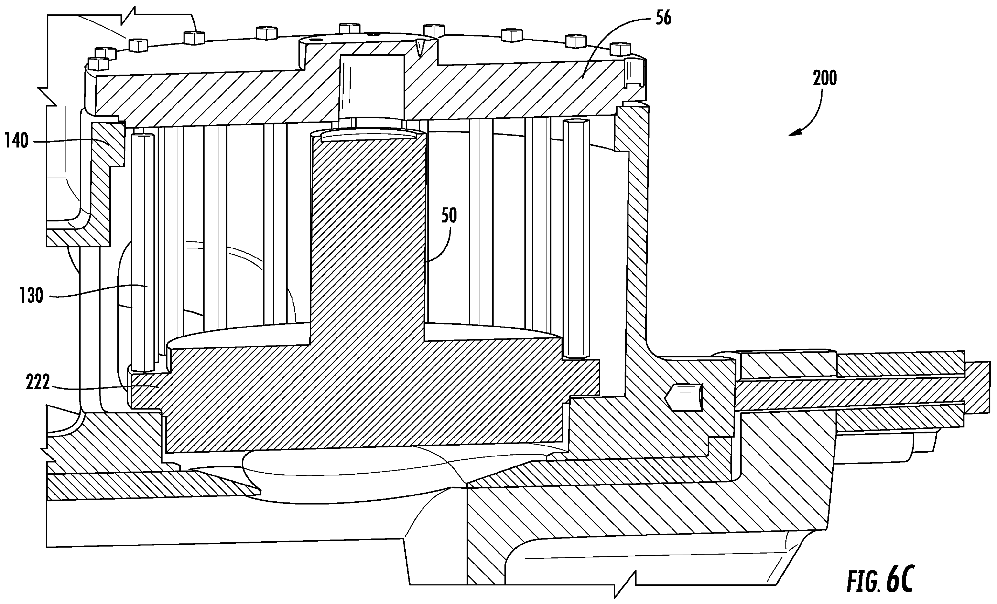

The present disclosure describes a clamping arrangement for a valve assembly used in reciprocating compressors. More specifically, the present disclosure describes a clamping arrangement for a valve assembly used in, for example, a compressor cylinder. Referring to **FIGS. 6A-6C**, the clamping arrangement 100, 200 includes a valve assembly 50, a clamping mechanism 120, 220 and a plurality of fasteners 130 for directly securing the valve assembly 50 to the cylinder 12. As will be described in greater detail below, in use, the plurality of fasteners 130 directly secures the valve assembly 50 to the cylinder 12. As best seen in **FIG. 6C**, the improved clamping arrangement 200 also includes a valve cover 56 for covering and sealing the valve cage 40. Although, improved clamping arrangement 200 is shown, the same may apply to clamping arrangement 100. As previously mentioned, the valve assembly 50 may be a discharge valve 60 or a suction valve 70, although it is contemplated that the disclosed clamping arrangement can be used in combination with other types of valve assemblies. In addition, although the present disclosure illustrates and discusses use of the clamping arrangement for a valve assembly in connection with compressors and, more specifically, piston compressors, it is contemplated that the improved clamping methods may be used in connection with any valve or valve assembly in any other appropriate application.

The present disclosure achieves the desired results by incorporating a separate clamping mechanism 120, 220 that has no contact or direct interaction with the valve cover 56. As such, the valve gland 54 (**FIG. 5**) is eliminated. Referring to **FIG. 6A**, the clamping arrangement 100 incorporates a separate clamping mechanism 120, which in the illustrated embodiment is a clamping ring 122, to provide the required hold down force for the valve assembly 50. As noted, the separate clamping mechanism 120 may be in the form of a clamping ring 122 that extends around the perimeter of the valve assembly 50. The clamping ring 122 includes a plurality of openings for receiving a plurality of fasteners 130 for securing the clamping ring 122 and hence the valve assembly 50 to the cylinder 12. The valve assembly 50 and, more specifically, the valve seat 61, 72 and/or the valve guard 62, 71 (depending on the type of valve assembly) may include a circumferential lip 116 that is received on an upper surface 13 of the compressor cylinder 12. In use, the clamping ring 122 may contact the upper surface of the valve assembly 50, more specifically, the circumferential lip 116 of the valve seat 61, 72 and/or the valve guard 62, 71, so that when the fasteners 130 are tightented, the clamping ring 122 provides a clamping force against the lip 116 to clamp the lip 116 and the valve assembly 50 against the cylinder 12. In use, as previously mentioned, the clamping ring 122 is free from any contact or other direct interaction with the valve cover 56.

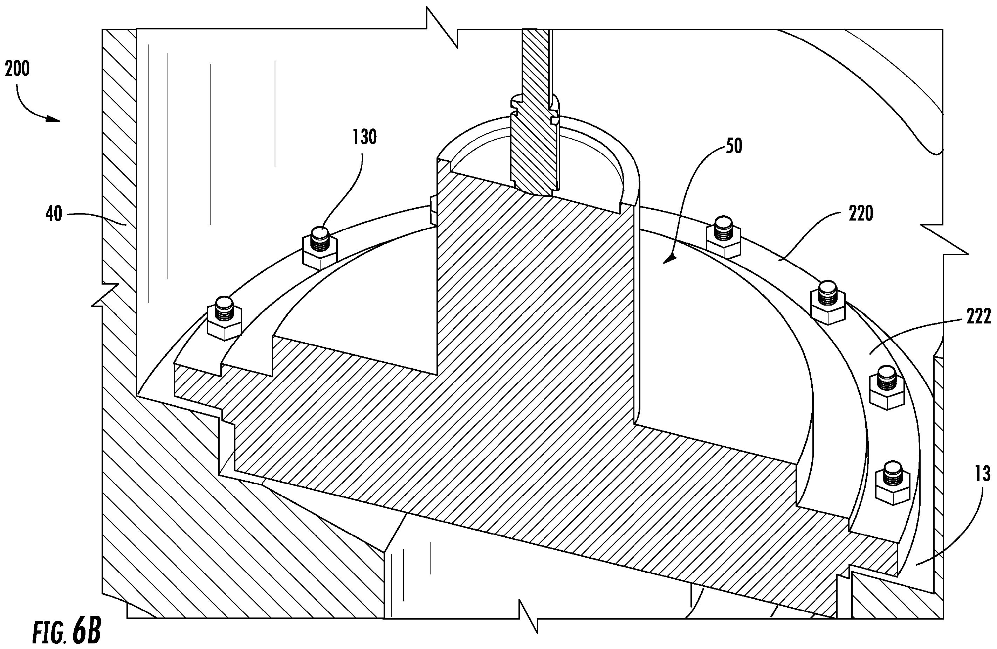

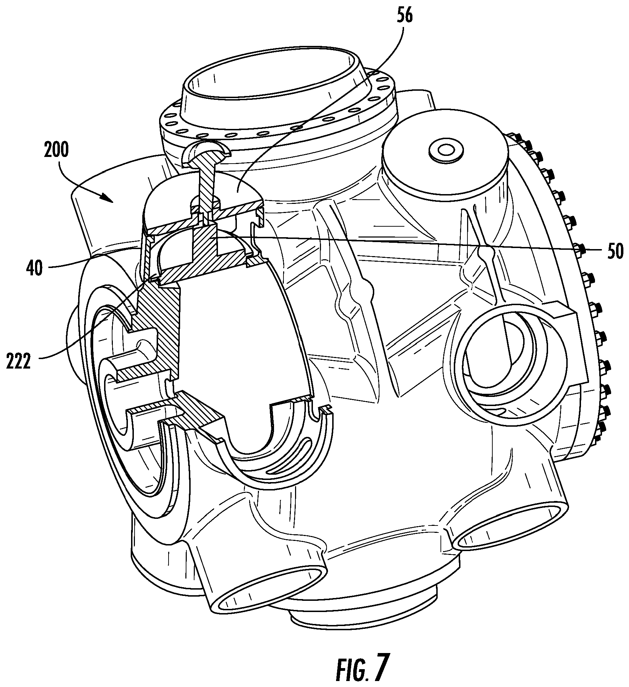

Alternatively, referring to **FIGS. 6B****,** **6C** and 7, the clamping arrangement 200 may include an integrated clamping mechanism 220. The integrated clamping mechanism 220 may include a valve assembly 50 having an integrated clamping flange 222. The integrated clamping flange 222 may be configured to receive fasteners 130 to provide the required hold down force for the valve assembly 50. As shown, the integrated clamping flange 222 may be integral to the valve assembly 50. The integrated clamping flange 222 includes a plurality of openings for receiving a plurality of fasteners 130 for securing the integrated clamping flange 222 and hence the valve assembly 50 to the cylinder 12. The integrated clamping flange 222 may include a circumferential lip that is received on an upper surface 13 of the compressor cylinder 12. Thus arranged, when the fasteners 130 are tightented, the integrated clamping flange 222 is clamped against the cylinder 12, thus securing the valve assembly 50 in place with respect to the cylinder 12. Alternatively, the integrated clamping flange 222 may feature a lip for only a part of the total circumference. In use, as previously mentioned, the integrated clamping flange 222 is free from any contact or other interaction with the valve cover 56.

In this manner, a new improved clamping method for valve assemblies is disclosed, which is independent of any clamping force provided by or guided through the valve cover 56, but instead utilizes a separate clamping ring 122 or an integrated clamping flange 222 including a plurality of openings spaced about the perimeter of the valve assembly 50 to provide a desired hold down force. The clamping ring 122 or an integrated clamping flange 222 is, in the illustrated embodiments, completely free from any physical contact with the valve cover 56.

In use, the clamping ring 122 or integrated clamping flange 222 are secured to the cylinder 12 by a plurality of fasteners 130. The fasteners 130 can be any fasteners now known or hereafter developed including, but not limited to, studs/bolts and nuts (as generally shown), screws, etc. Moreover, referring to FIG. 6C, the plurality of fasteners 130 may be extended or elongated fasteners, such as elongated bolts, that extend adjacent to, but do not contact or otherwise interact with the valve cover 56. By incorporating elongated fasteners 130 as shown, a desired pretensioning may be achieved while minimizing the effects of strain loss over time from thermal effects or relaxation. It should be understood that while elongated fasteners have been shown and described in connection with the clamping arrangement 200, such elongated fasteners may also be used in connection with the clamping arrangement 100 described in relation to **FIG. 6A****.**

In use, the fasteners 130 supply a desired hold down force to secure the valve assembly 50 to the cylinder 12. In the illustrated embodiments, the fasteners 130 may be positioned in a circular pattern around the perimeter of the valve assembly 50 within the gas filled passage area of the cylinder 12. As mentioned, the fasteners 130 are also free from any physical contact or engagement with the valve cover 56.

In this manner, the hold down force applied to the valve assembly 50 may be directly applied by a separate clamping mechanism 120 associated with the outer perimeter of the valve assembly 50 to secure the valve assembly 50 directly to the cylinder 12. Alternatively, the hold down force applied to the valve assembly 50 may be directly applied by an extended, integrated circumferential flange 222 having a circular hole pattern, through which the aforementioned hold down fasteners 130 extend and on which a plurality of nuts (or bolt heads) may press down. This extended circumferential flange 222 may be an integral part of the valve assembly 50.

*According to the present disclosure, the improved clamping arrangement 100, 200 eliminates the clamping function of the valve cover 56, and instead directly applies a clamping arrangement to the valve assembly 50. As previously noted, the improved clamping arrangement may require less precise dimensional tolerances of parts, easier assembly, increased reliability of the different seals, minimizes the required space and thus can produce a smaller and lighter cylinder.*

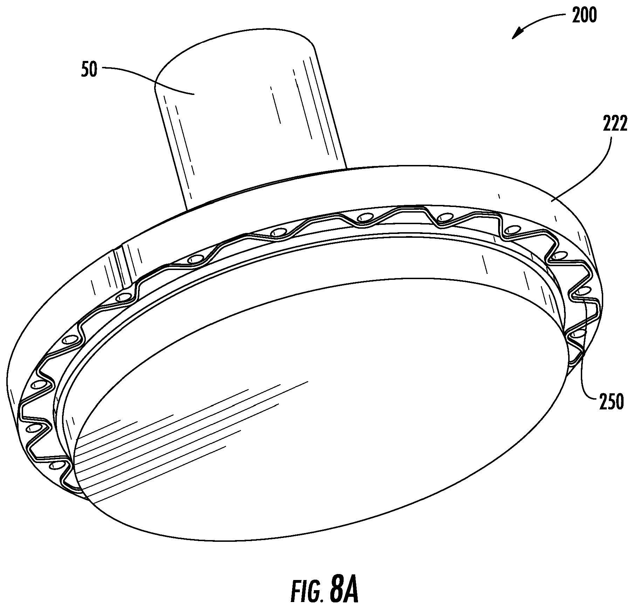

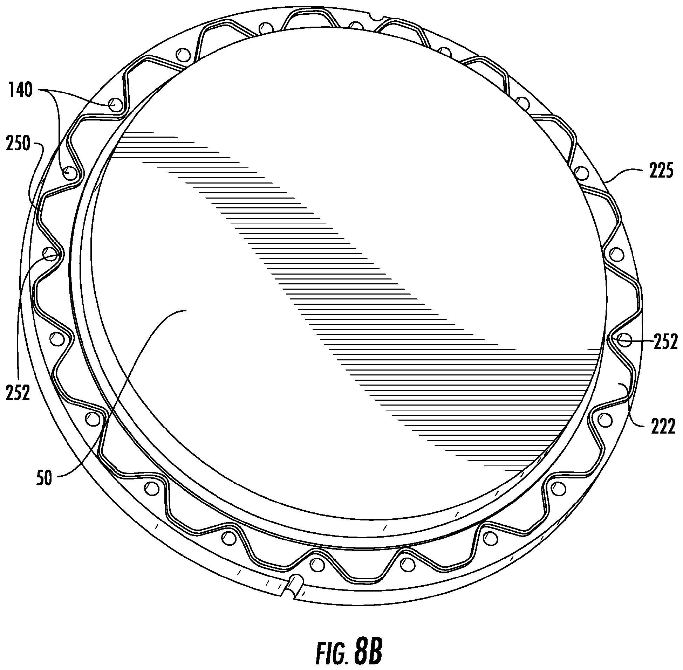

*One or more sealing elements may be disposed between the valve assembly 50 and the cylinder 12, more specifically, surface 13 formed on the cylinder 12.* The seal may be any conventional seal now known or hereafter developed. For example, the seal may be a conventional circular seal that sits between the cylinder 12 and the bottom surface of the valve assembly adjacent to the perimeter of the valve assembly. *Referring to* ***FIGS. 8A*** *and* ***8B*** *illustrating the* clamping arrangement 200, *the seal 250 may include a zig-zag or wavy pattern. As shown, a portion 251 of the seal 250 lies adjacent to a perimeter 225 of the integrated flange 222 between fastener openings 140 but at each fastener opening 140, a portion 252 of the seal 250 lies interior (e.g., inwards away from the perimeter) of the fastener opening 140. As such, the seal 250 provides a greater sealing area than a simple circular seal. The seal 250 is also better able to handle the non-uniform* surface pressure distribution associated with the clamping arrangement 250 (the surface pressure is non-uniformly distributed due to the effects of the circumferentially distributed location of the fasteners in combination with the actual stiffness of the integrated clamping flange). It should be understood that while the seal 250 has been shown and described in connection with the clamping arrangement 200, the seal 250 may also be used in connection with the clamping arrangement 100. *In use, by providing a seal 250 with a zig-zag or wavy pattern, the* bending of the valve seat and guard may be reduced, which improves the sealing capabilities of the valve assembly. The seal 250 may be made from any known material including, but not limited, to a metallic or non-metallic material. In addition, the seal 250 may be made from a combination of materials.

As used herein, an element or step recited in the singular and proceeded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

While certain embodiments of the disclosure have been described herein, it is not intended that the disclosure be limited thereto, as it is intended that the disclosure is limited by the scope of the appended claims. Therefore, the above description should not be construed as limiting, but merely as exemplifications of particular embodiments.

## Claims

1. A valve clamping assembly for securing a suction or discharge valve assembly (50) to a cylinder (12) of a reciprocating compressor, the valve clamping assembly includes:
a valve assembly (50) and a valve cage (40), the valve assembly (50) at least partially disposed in the valve cage (40);
a valve cover (56) for sealing the valve cage (40) from a surrounding environment;
a clamping mechanism (120,220) for clamping the valve assembly (50) to a cylinder (12), the clamping mechanism (120, 220) having a plurality of openings, and a plurality of fasteners extending into or through the plurality of openings for securing the clamping mechanism to a cylinder for securing the valve assembly to a cylinder; and
**characterized in that** when in use the clamping mechanism (120,220) and the plurality of fasteners are free of contact with the valve cover (56).

2. The valve clamping assembly of claim 1, wherein the clamping mechanism (120) includes a clamping ring (122) for securing the suction or discharge valve assembly (50) directly to the cylinder (12).

3. The valve clamping assembly of claim 2, wherein the clamping ring (122) is configured to extend around, and contact, a perimeter portion of the suction or discharge valve assembly (50).

4. The valve clamping assembly of claim 2, wherein the clamping ring (122) includes a plurality of openings for receiving a plurality of fasteners (130) for securing the clamping ring, and hence the suction or discharge valve assembly (50), to the cylinder (12).

5. The valve clamping assembly of claim 1, wherein the clamping mechanism (220) is integrated with the suction or discharge valve assembly (50).

6. The valve clamping assembly of claim 5, wherein the clamping mechanism (220) comprises a clamping flange (222) that is integral to the suction or discharge valve assembly (50), the clamping flange for securing the suction or discharge valve assembly directly to the cylinder (12).

7. The valve clamping assembly of claim 6, wherein the integrated clamping flange (222) includes a plurality of openings for receiving a plurality of fasteners (130) for securing the integrated clamping flange, and hence the suction or discharge valve assembly (50), to the cylinder (12).

8. The valve clamping assembly of claims 4, or 7, wherein the plurality of fasteners (130) are elongated fasteners that extend adjacent to, but do not contact, the valve cover (56).

9. The valve clamping assembly of any of the preceding claims, further comprising a seal (250) located between the valve assembly (50) and the cylinder (12), wherein the seal includes a zig-zag or wavy pattern such that a portion of the seal lies adjacent to a perimeter of the valve assembly between fastener openings (140) while a portion of the seal lies interior of the fastener opening.

10. A method for securing a valve assembly (50) to a cylinder (12) of a reciprocating compressor, the method comprising the steps of:
placing a valve assembly (50) into a valve cage (40);
securing the valve assembly (50) to a cylinder (12) via a clamping mechanism (120,220) having a plurality of openings for receiving a first plurality of fasteners (130); and
securing a valve cover (56) to the valve cage (40), the valve cover having a second plurality of openings for receiving a plurality of cover fasteners;
**characterized in that** the clamping mechanism (120,220) and the first plurality of fasteners (130) have no contact with the valve cover (56).

11. The method of claim 10, wherein the clamping mechanism (120) is a clamping ring (122) that extends around a perimeter of the valve assembly (50).

12. The method of claim 10, wherein the clamping mechanism (220) is a flange (222) integrated into the valve assembly (50).

## Patentansprüche

1. Eine Ventilklemmanordnung zum Sichern einer Ansaug- oder Auslassventilanordnung (50) an einem Zylinder (12) eines Hubkolbenverdichters, wobei die Ventilklemmanordnung Folgendes umfasst:
eine Ventilanordnung (50) und einen Ventilkäfig (40), wobei die Ventilanordnung (50) zumindest teilweise in dem Ventilkäfig (40) angeordnet ist;
eine Ventilabdeckung (56) zum Abdichten des Ventilkäfigs (40) gegenüber einer Umgebung;
einen Klemmmechanismus (120, 220) zum Festklemmen der Ventilanordnung (50) an einem Zylinder (12), wobei der Klemmmechanismus (120, 220) Folgendes aufweist:
eine Vielzahl von Öffnungen und eine Vielzahl von Befestigungselementen, die sich in oder durch die Vielzahl von Öffnungen erstrecken, zum Sichern des Klemmmechanismus an einem Zylinder zum Sichern der Ventilanordnung an einem Zylinder; und
**dadurch gekennzeichnet, dass** der Klemmmechanismus (120, 220) und die Vielzahl von Befestigungselementen im Gebrauch frei von Kontakt mit der Ventilabdeckung (56) sind.

2. Ventilklemmanordnung gemäß Anspruch 1, wobei der Klemmmechanismus (120) einen Klemmring (122) zum Sichern der Ansaug- oder Auslassventilanordnung (50) direkt an dem Zylinder (12) umfasst.

3. Ventilklemmanordnung gemäß Anspruch 2, wobei der Klemmring (122) dazu konfiguriert ist, sich um einen Umfangsabschnitt der Ansaug- oder Auslassventilanordnung (50) zu erstrecken und diesen zu berühren.

4. Ventilklemmanordnung gemäß Anspruch 2, wobei der Klemmring (122) eine Vielzahl von Öffnungen zum Aufnehmen einer Vielzahl von Befestigungselementen (130) zum Sichern des Klemmrings und somit der Ansaug- oder Auslassventilanordnung (50) an dem Zylinder (12) umfasst.

5. Ventilklemmanordnung gemäß Anspruch 1, wobei der Klemmmechanismus (220) in die Ansaug- oder Auslassventilanordnung (50) integriert ist.

6. Ventilklemmanordnung gemäß Anspruch 5, wobei der Klemmmechanismus (220) einen Klemmflansch (222) beinhaltet, der mit der Ansaug- oder Auslassventilanordnung (50) integral ist, wobei der Klemmflansch zum Sichern der Ansaug- oder Auslassventilanordnung direkt an dem Zylinder (12) dient.

7. Ventilklemmanordnung gemäß Anspruch 6, wobei der integrierte Klemmflansch (222) eine Vielzahl von Öffnungen zum Aufnehmen einer Vielzahl von Befestigungselementen (130) zum Sichern des integrierten Klemmflanschs und somit der Ansaug- oder Auslassventilanordnung (50) an dem Zylinder (12) umfasst.

8. Ventilklemmanordnung gemäß Anspruch 4 oder 7, wobei die Vielzahl von Befestigungselementen (130) längliche Befestigungselemente sind, die sich angrenzend an die Ventilabdeckung (56) erstrecken, diese aber nicht berühren.

9. Ventilklemmanordnung gemäß einem der vorhergehenden Ansprüche, die ferner eine Dichtung (250) beinhaltet, die sich zwischen der Ventilanordnung (50) und dem Zylinder (12) befindet, wobei die Dichtung ein Zickzack- oder Wellenmuster umfasst, sodass ein Abschnitt der Dichtung angrenzend an einen Umfang der Ventilanordnung zwischen Befestigungselementöffnungen (140) liegt, während ein Abschnitt der Dichtung innerhalb der Befestigungselementöffnung liegt.

10. Ein Verfahren zum Sichern einer Ventilanordnung (50) an einem Zylinder (12) eines Hubkolbenverdichters, wobei das Verfahren die folgenden Schritte beinhaltet:
Platzieren einer Ventilanordnung (50) in einem Ventilkäfig (40);
Sichern der Ventilanordnung (50) an einem Zylinder (12) über einen Klemmmechanismus (120, 220), der eine Vielzahl von Öffnungen zum Aufnehmen einer ersten Vielzahl von Befestigungselementen (130) aufweist; und
Sichern einer Ventilabdeckung (56) an dem Ventilkäfig (40), wobei die Ventilabdeckung eine zweite Vielzahl von Öffnungen zum Aufnehmen einer Vielzahl von Abdeckungsbefestigungselementen aufweist;
**dadurch gekennzeichnet, dass** der Klemmmechanismus (120, 220) und die erste Vielzahl von Befestigungselementen (130) keinen Kontakt mit der Ventilabdeckung (56) aufweisen.

11. Verfahren gemäß Anspruch 10, wobei der Klemmmechanismus (120) ein Klemmring (122) ist, der sich um einen Umfang der Ventilanordnung (50) erstreckt.

12. Verfahren gemäß Anspruch 10, wobei der Klemmmechanismus (220) ein in die Ventilanordnung (50) integrierter Flansch (222) ist.

## Revendications

1. Un ensemble de serrage de soupape pour fixer un ensemble soupape d'aspiration ou de refoulement (50) à un cylindre (12) d'un compresseur alternatif, l'ensemble de serrage de soupape incluant :
un ensemble soupape (50) et une cage de soupape (40), l'ensemble soupape (50) étant au moins partiellement disposé dans la cage de soupape (40) ;
un cache-soupape (56) pour étanchéifier la cage de soupape (40) par rapport à un environnement ambient ;
un mécanisme de serrage (120, 220) pour serrer l'ensemble soupape (50) sur un cylindre (12), le mécanisme de serrage (120, 220) ayant une pluralité d'ouvertures, et une pluralité d'éléments d'assujettissement s'étendant dans ou à travers la pluralité d'ouvertures pour fixer le mécanisme de serrage à un cylindre pour fixer l'ensemble soupape à un cylindre ; et
**caractérisé en ce que**, lors de l'utilisation, le mécanisme de serrage (120, 220) et la pluralité d'éléments d'assujettissement sont exempts de contact avec le cache-soupape (56).

2. L'ensemble de serrage de soupape de la revendication 1, dans lequel le mécanisme de serrage (120) inclut une bague de serrage (122) pour fixer l'ensemble soupape d'aspiration ou de refoulement (50) directement au cylindre (12).

3. L'ensemble de serrage de soupape de la revendication 2, dans lequel la bague de serrage (122) est configurée pour s'étendre autour, et entrer en contact avec, une portion périmétrique de l'ensemble soupape d'aspiration ou de refoulement (50).

4. L'ensemble de serrage de soupape de la revendication 2, dans lequel la bague de serrage (122) inclut une pluralité d'ouvertures pour recevoir une pluralité d'éléments d'assujettissement (130) pour fixer la bague de serrage, et par conséquent l'ensemble soupape d'aspiration ou de refoulement (50), au cylindre (12).

5. L'ensemble de serrage de soupape de la revendication 1, dans lequel le mécanisme de serrage (220) est intégré à l'ensemble soupape d'aspiration ou de refoulement (50).

6. L'ensemble de serrage de soupape de la revendication 5, dans lequel le mécanisme de serrage (220) comprend une bride de serrage (222) qui est solidaire de l'ensemble soupape d'aspiration ou de refoulement (50), la bride de serrage étant destinée à fixer l'ensemble soupape d'aspiration ou de refoulement directement au cylindre (12).

7. L'ensemble de serrage de soupape de la revendication 6, dans lequel la bride de serrage solidaire (222) inclut une pluralité d'ouvertures pour recevoir une pluralité d'éléments d'assujettissement (130) pour fixer la bride de serrage solidaire, et par conséquent l'ensemble soupape d'aspiration ou de refoulement (50), au cylindre (12).

8. L'ensemble de serrage de soupape des revendications 4, ou 7, dans lequel la pluralité d'éléments d'assujettissement (130) sont des éléments d'assujettissement allongés qui s'étendent de manière adjacente au cache-soupape (56), mais n'entrent pas en contact avec celui-ci.

9. L'ensemble de serrage de soupape de n'importe lesquelles des revendications précédentes, comprenant en outre un joint d'étanchéité (250) situé entre l'ensemble soupape (50) et le cylindre (12), le joint d'étanchéité incluant un motif en zigzag ou ondulé de telle sorte qu'une portion du joint d'étanchéité se trouve de manière adjacente à un périmètre de l'ensemble soupape entre des ouvertures d'élément d'assujettissement (140) alors qu'une portion du joint d'étanchéité se trouve à l'intérieur de l'ouverture d'élément d'assujettissement.

10. Un procédé pour fixer un ensemble soupape (50) à un cylindre (12) d'un compresseur alternatif, le procédé comprenant les étapes consistant à :
placer un ensemble soupape (50) dans une cage de soupape (40) ;
fixer l'ensemble soupape (50) à un cylindre (12) via un mécanisme de serrage (120, 220) ayant une pluralité d'ouvertures pour recevoir une première pluralité d'éléments d'assujettissement (130) ; et
fixer un cache-soupape (56) à la cage de soupape (40), le cache-soupape ayant une deuxième pluralité d'ouvertures pour recevoir une pluralité d'éléments d'assujettissement de cache ;
**caractérisé en ce que** le mécanisme de serrage (120, 220) et la première pluralité d'éléments d'assujettissement (130) ne viennent pas en contact avec le cache-soupape (56).

11. Le procédé de la revendication 10, dans lequel le mécanisme de serrage (120) est une bague de serrage (122) qui s'étend autour d'un périmètre de l'ensemble soupape (50).

12. Le procédé de la revendication 10, dans lequel le mécanisme de serrage (220) est une bride (222) intégrée dans l'ensemble soupape (50).
